# EUROPEAN PATENT APPLICATION

(11) **EP 4 528 170 A1**
(43) Date of publication of application: **26.03.2025**
(21) Application number: 22947654.4
(22) Date of filing: 30.09.2022
(51) Int. Cl.: F24F 5/00, F24F 7/08, F24F 11/67, F24F 11/72, F24F 11/84, F24F 11/88, F24F 12/00, F24F 13/30

(54) **FRESH AIR EQUIPMENT**

(30) Priority: 23.06.2022 CN 202210733516; 23.06.2022 CN 202221591296 U; 23.06.2022 CN 202221614490 U
(71) Applicant: Wuhu Maty Air-Conditioning Equipment Co., Ltd., Wuhu, Anhui 241000 (CN); GD Midea Air-Conditioning Equipment Co., Ltd., Foshan, Guangdong 528311 (CN)
(72) Inventor: GAO, Zhuoxian, Wuhu, Anhui 241000 (CN); XU, Zhenkun, Wuhu, Anhui 241000 (CN); HUANG, Jianyun, Wuhu, Anhui 241000 (CN); LI, Jinbo, Wuhu, Anhui 241000 (CN); DU, Shunkai, Wuhu, Anhui 241000 (CN); HUANG, Zhaobin, Wuhu, Anhui 241000 (CN); YU, Guangnan, Wuhu, Anhui 241000 (CN)
(74) Representative: RGTH
(86) International application number: PCT/CN2022/123234
(87) International publication number: WO 2023/245914

(57) **Abstract**

Disclosed is a fresh air equipment. The fresh air equipment includes a casing and a first heat exchange system. An air supply channel is formed in the casing. The first heat exchange system includes a fresh air heat exchanger structure and a first switching device. The fresh air heat exchanger structure is located in the air supply channel, and the fresh air heat exchanger structure is provided with a refrigerant pipeline. The first switching device is communicated with the fresh air heat exchanger structure, and the first switching device is configured to switch the flow direction of a refrigerant in the fresh air heat exchanger structure. When the first heat exchange system is in different operation modes, refrigerants of the first heat exchange system pass through the refrigerant pipeline located downstream of the air supply channel and then pass through the refrigerant pipeline located upstream of the air supply channel.

## Description

### CROSS-REFERENCE TO RELATED APPLICATIONS

The present application claims priority to Chinese Patent Applications Nos. 202210733516.1, 202221591296.5, and 202221614490.0, all filed on June 23, 2022, the entire contents of which are incorporated herein by reference.

### TECHNICAL FIELD

The present application relates to the technical field of air conditioning equipment, in particular to a fresh air equipment.

### BACKGROUND

Existing fresh air equipment mainly consists of an indoor heat exchanger, a compressor and an outdoor heat exchanger to form a refrigerant circuit. In the cooling mode, the refrigerant flowing out of the compressor returns to the compressor through the outdoor heat exchanger and the indoor heat exchanger. In the heating mode, the refrigerant flowing out of the compressor returns to the compressor through the indoor heat exchanger and the outdoor heat exchanger. In the cooling and heating modes, the refrigerant flowing through the indoor heat exchanger flows in the opposite direction, which will cause that in a certain mode, the refrigerant flowing through the indoor heat exchanger is consistent with the air supply direction, while in another mode, the refrigerant flowing through the indoor heat exchanger is opposite to the air supply direction, which will affect the heat transfer capacity of the fresh air equipment.

### SUMMARY

The main purpose of the present application is to propose a fresh air equipment, aiming to solve the problem that existing indoor heat exchangers have different refrigerant flow directions in different modes.

In order to achieve the above purpose, the present application proposes a fresh air equipment, comprising:
a casing; and
a first heat exchange system;
an air supply channel is provided in the casing, and the first heat exchange system comprises:
   a fresh air heat exchanger structure; the fresh air heat exchanger structure is located in the air supply channel, and the fresh air heat exchanger structure is provided with a refrigerant pipeline; and
   a first switching device; the first switching device is communicated with the fresh air heat exchanger structure, and the first switching device is configured to switch a flow direction of refrigerant in the fresh air heat exchanger structure;
   in different operation modes of the first heat exchange system, the refrigerant of the first heat exchange system is first configured to pass through the refrigerant pipeline located downstream of the air supply channel, and then configured to pass through the refrigerant pipeline located upstream of the air supply channel.

In order to achieve the above purpose, the present application also proposes a fresh air equipment, comprising:
a casing; and
a first heat exchange system;
an air supply channel is provided in the casing, and the first heat exchange system comprises:
   a fresh air heat exchanger structure; the fresh air heat exchanger structure is located in the air supply channel, and the fresh air heat exchanger structure is provided with a refrigerant circulation inlet and a refrigerant circulation outlet; and
   a first switching device; the first switching device is communicated with both the refrigerant circulation inlet and the refrigerant circulation outlet, and the first switching device is configured to switch a flow direction of refrigerant in the fresh air heat exchanger structure;
   in different operation modes of the first heat exchange system, the refrigerant of the first heat exchange system is configured to flow into the fresh air heat exchanger structure through the refrigerant circulation inlet, and then configured to flow out of the fresh air heat exchanger structure through the refrigerant circulation outlet.

In an embodiment, the refrigerant circulation inlet is located downstream of the air supply channel relative to the refrigerant circulation outlet.

In an embodiment, a first refrigerant flow path is formed in the first heat exchange system; the fresh air heat exchanger structure is located in the first refrigerant flow path, and the first heat exchange system further comprises:
a first compressor disposed in the first refrigerant flow path and provided with a first exhaust port and a first return port;
a first heat exchange module provided in the first refrigerant flow path and communicated with the first switching device; and
a commutation device communicated with the first exhaust port, the first return port, the first heat exchange module and the first switching device; the commutation device is configured to switch the flow direction of the refrigerant so that the refrigerant is first configured to pass through the first heat exchange module and then configured to pass through the first switching device, or, so that the refrigerant is first configured to pass through the first switching device and then configured to pass through the first heat exchange module;
the first switching device is communicated with the commutation device, the first heat exchange module, the refrigerant circulation inlet of the fresh air heat exchanger structure, and the refrigerant circulation outlet of the fresh air heat exchanger structure; the first switching device is configured to switch the flow direction of the refrigerant, so that the refrigerant is first configured to flow into the fresh air heat exchanger structure through the refrigerant circulation inlet, and then configured to flow out of the fresh air heat exchanger structure through the refrigerant circulation outlet.

In an embodiment, the casing is further provided with an exhaust channel; the first heat exchange module is installed in the exhaust channel, and the first compressor is installed in the exhaust channel or installed outside the casing.

In an embodiment, the air supply channel is such a channel that is configured to send outdoor fresh air into indoors by the fresh air equipment, and the exhaust channel is such a channel that is configured to discharge indoor air to outdoors by the fresh air equipment.

In an embodiment, the casing is further provided with an exhaust channel, and the first heat exchange module comprises a first outdoor heat exchanger and a heat recovery heat exchanger arranged in series; the heat recovery heat exchanger is arranged in the exhaust channel, and the first outdoor heat exchanger is arranged outside the casing; the first compressor is installed in the exhaust channel or outside the casing.

In an embodiment, the first heat exchange system further comprises a first throttling element provided in the first refrigerant flow path, and the first throttling element is located between the first heat exchange module and the first switching device.

In an embodiment, the first switching device comprises a first communication port, a second communication port, an inlet port and an outlet port, and the fresh air heat exchanger structure is communicated with the outlet port and the inlet port; the first switching device comprises:
a first one-way valve connected between the first communication port and the inlet port; the first one-way valve is configured to conduct in a direction from the inlet port to the first communication port;
a second one-way valve connected between the first communication port and the outlet port; the second one-way valve is configured to conduct in a direction from the first communication port to the outlet port;
a third one-way valve connected between the inlet port and the second communication port; the third one-way valve is configured to conduct in a direction from the inlet port to the second communication port; and
a fourth one-way valve connected between the outlet port and the second communication port; the fourth one-way valve is configured to conduct in a direction from the second communication port to the outlet port.

In an embodiment, the first heat exchange system further comprises a first throttling element; the first throttling element and the first one-way valve are arranged in series, and the first throttling element is provided between the first communication port and the first one-way valve.

In an embodiment, the outlet port is communicated to the refrigerant circulation inlet of the fresh air heat exchanger structure, and the inlet port is communicated to the refrigerant circulation outlet of the fresh air heat exchanger structure; the first communication port is communicated to the first heat exchange module, and the second communication port is communicated to the first compressor.

In an embodiment, the fresh air heat exchanger structure comprises a first fresh air heat exchanger and a second fresh air heat exchanger arranged in series, and the first fresh air heat exchanger is located downstream of the air supply channel relative to the second fresh air heat exchanger; the outlet port is connected to the first fresh air heat exchanger, and the inlet port is connected to the second fresh air heat exchanger.

In an embodiment, the first heat exchange system further comprises a second throttling element, and the second throttling element is provided on a flow path connected in series between the first fresh air heat exchanger and the second fresh air heat exchanger.

In an embodiment, the first heat exchange system further comprises a third throttling element, and the third throttling element is located on a flow path communicated between the refrigerant inlet of the second fresh air heat exchanger and the first communication port.

In an embodiment, the casing is further provided with an exhaust channel;
the fresh air equipment also comprises an exhaust fan; the exhaust fan is provided in the exhaust channel, and the exhaust fan is configured to exhaust air outdoors; and/or
the fresh air equipment also comprises an exhaust valve, and the exhaust valve is provided in the exhaust channel; and/or
the fresh air equipment also comprises an air supply fan; the air supply fan is provided in the air supply channel, and the air supply fan is configured to blow air indoors; and/or
the fresh air equipment also comprises an air supply valve, and the air supply valve is provided in the air supply channel.

In an embodiment, the exhaust channel comprises an indoor return air outlet and an outdoor exhaust outlet, and the air supply channel comprises an outdoor air inlet and an indoor air supply outlet; the exhaust fan is provided close to the indoor return air outlet, and the exhaust valve is arranged at the outdoor exhaust outlet; the air supply fan is arranged close to the indoor air supply outlet, and the air supply valve is arranged at the outdoor air inlet.

In an embodiment, the casing is formed with a communication port communicating the exhaust channel and the air supply channel, and the communication port is located upstream of the fresh air heat exchanger structure; the fresh air equipment also comprises a bypass ventilation valve, and the bypass ventilation valve is provided at the communication port.

In order to achieve the above purpose, the present application also proposes a fresh air equipment, comprising: a casing and a second heat exchange system; an air supply channel is provided in the casing, and a second refrigerant flow path is formed on the second heat exchange system; the second heat exchange system comprises:
a second outdoor heat exchanger, a third fresh air heat exchanger and a fourth fresh air heat exchanger arranged in the second refrigerant flow path; the third fresh air heat exchanger and the fourth fresh air heat exchanger are both arranged in the air supply channel; and
a second switching device configured to switch the second outdoor heat exchanger to communicate with the third fresh air heat exchanger ,or configured to communicate with the third fresh air heat exchanger and the fourth fresh air heat exchanger at the same time.

In an embodiment, the second switching device further comprises a fourth throttling element and a fifth one-way valve; the fourth throttling element is provided on the second refrigerant flow path, and located between the third fresh air heat exchanger and the fourth fresh air heat exchanger; and
the fifth one-way valve is arranged in parallel with the third fresh air heat exchanger and the fourth throttling element, and a conducting direction of the fifth one-way valve is from the fourth fresh air heat exchanger to the second outdoor heat exchanger.

In an embodiment, the second switching device further comprises a fourth throttling element and a fifth one-way valve; the fourth throttling element is provided on the second refrigerant flow path, and the fifth one-way valve is communicated between the second outdoor heat exchanger and the fourth throttling element.

In an embodiment, the second heat exchange system further comprises a fifth throttling element, and the fifth throttling element is provided on the second refrigerant flow path and located between the third fresh air heat exchanger and the second outdoor heat exchanger.

In an embodiment, an arrangement direction of the third fresh air heat exchanger and the fourth fresh air heat exchanger is opposite to an air supply direction of the air supply channel.

In an embodiment, the casing is further provided with an exhaust channel, and the second heat exchange system further comprises a second compressor provided on the second refrigerant flow path; and
the second outdoor heat exchanger is installed in the exhaust channel, and the second compressor is installed in the exhaust channel or outside the casing.

In an embodiment, the fresh air equipment further comprises a first heat exchange system; the first heat exchange system comprises a fresh air heat exchanger structure and a first switching device, and the fresh air heat exchanger structure is located in the air supply channel;
the fresh air heat exchanger structure comprises a first fresh air heat exchanger and a second fresh air heat exchanger arranged in series;
the second fresh air heat exchanger is located between the third fresh air heat exchanger and the fourth fresh air heat exchanger; and/or
the first fresh air heat exchanger and the third fresh air heat exchanger are arranged in parallel in a width direction or height direction of the air supply channel; and/or
the first fresh air heat exchanger and the third fresh air heat exchanger are configured to jointly block a cross section of the air supply channel at the first fresh air heat exchanger.

In an embodiment, the fresh air equipment further comprises a first heat exchange system, and the first heat exchange system comprises:
a fresh air heat exchanger structure located in the air supply channel; the fresh air heat exchanger structure is provided with a refrigerant pipeline; and
a first switching device communicated to the fresh air heat exchanger structure; the first switching device is configured to switch a flow direction of the refrigerant in the fresh air heat exchanger structure;
in different operation modes of the first heat exchange system, the refrigerant of the first heat exchange system is first configured to pass through the refrigerant pipeline located downstream of the air supply channel, and then configured to pass through the refrigerant pipeline located upstream of the air supply channel.

In an embodiment, the fresh air equipment further comprises:
a first heat exchange system; the first heat exchange system comprises: a fresh air heat exchanger structure located in the air supply channel; the fresh air heat exchanger structure is provided with a refrigerant circulation inlet and a refrigerant circulation outlet; and a first switching device communicated to both the refrigerant circulation inlet and the refrigerant circulation outlet; the first switching device is configured to switch a flow direction of the refrigerant in the fresh air heat exchanger structure;
in different operation modes of the first heat exchange system, the refrigerant of the first heat exchange system is configured to flow into the fresh air heat exchanger structure through the refrigerant circulation inlet, and then configured to flow out of the fresh air heat exchanger structure through the refrigerant circulation outlet.

In an embodiment, the fresh air equipment further comprises:
a second heat exchange system; and
an outdoor fan;
the second heat exchange system comprises a second compressor, a second outdoor heat exchanger and a fourth fresh air heat exchanger;
the casing comprises a main body casing and an outdoor unit casing, and the air supply channel and the exhaust channel are provided in the main body casing;
the first heat exchange system also comprises a first compressor and a first heat exchange module, and the first heat exchange module comprises a first outdoor heat exchanger and a heat recovery heat exchanger arranged in series;
the heat recovery heat exchanger is arranged in the exhaust channel, and the fourth fresh air heat exchanger is arranged in the air supply channel; and
the first compressor, the first outdoor heat exchanger, the second compressor, the second outdoor heat exchanger and the outdoor fan are arranged in the outdoor unit casing, and the first outdoor heat exchanger and the second outdoor heat exchanger are connected and arranged opposite to the outdoor fan.

In the technical solution provided by the present application, by arranging a first switching device, in different operation modes, the refrigerant of the first heat exchange system first passes through the refrigerant pipeline located downstream of the air supply channel, and then passes through the refrigerant pipeline located upstream of the air supply channel, so that the refrigerant flows from the downstream of the air supply channel to the upstream of the air supply channel in the fresh air heat exchanger structure.

### BRIEF DESCRIPTION OF THE DRAWINGS

In order to more clearly illustrate the technical solutions in the embodiments of the present application or the related art, the following will briefly introduce the drawings that need to be used in the description of the embodiments or the related art. Obviously, the accompanying drawings in the following description are only some embodiments of the present application, and those skilled in the art can also obtain other drawings according to the structures shown in these drawings without creative effort.
FIG. 1 is a schematic diagram of the fresh air equipment according to a first embodiment of the present application.
FIG. 2 is a schematic diagram of the fresh air equipment according to a second embodiment of the present application.
FIG. 3 is a schematic diagram of the fresh air equipment according to a third embodiment of the present application.
FIG. 4 is a schematic diagram of the fresh air equipment according to a fourth embodiment of the present application.
FIG. 5 is a schematic diagram of the fresh air equipment according to a fifth embodiment of the present application.
FIG. 6 is a schematic diagram of the fresh air equipment according to a sixth embodiment of the present application.

### Explanation of reference signs:

| reference sign | name | reference sign | name |
|---|---|---|---|
| 100 | fresh air equipment | 10 | first heat exchange system |
| 20 | second heat exchange system | 11 | first compressor |
| 12 | first heat exchange module | 13 | first fresh air heat exchanger |
| 14 | second fresh air heat exchanger | 131 | refrigerant circulation inlet |
| 132 | refrigerant circulation outlet | 15 | first throttling element |
| 16 | second throttling element | 17 | third throttling element |
| 18 | first one-way valve | 19 | second one-way valve |
| 1 | third one-way valve | 2 | fourth one-way valve |
| 3 | commutation device | 4 | air supply channel |
| 5 | exhaust channel | 6 | air supply fan |
| 7 | air supply valve | 8 | exhaust fan |
| 9 | exhaust valve | 27 | second compressor |
| 21 | second outdoor heat exchanger | 22 | third fresh air heat exchanger |
| 23 | fourth fresh air heat exchanger | 24 | fourth throttling element |
| 25 | fifth one-way valve | 26 | fifth throttling element |
| 30 | bypass ventilation valve | 31 | first communication port |
| 32 | second communication port | 33 | inlet port |
| 34 | outlet port | 35 | first outdoor heat exchanger |
| 36 | heat recovery heat exchanger | 37 | outdoor fan |

The realization, functional features and advantages of the present application will be further described in conjunction with the embodiments and with reference to the accompanying drawings.

### DETAILED DESCRIPTION OF THE EMBODIMENTS

The following will clearly and completely describe the technical solutions in the embodiments of the present application with reference to the accompanying drawings in the embodiments of the present application. Obviously, the described embodiments are only part of the embodiments of the present application, not all of them. Based on the embodiments in the present application, all other embodiments obtained by those skilled in the art without creative efforts fall within the protection scope of the present application.

It should be noted that if there is a directional indication (such as up, down, left, right, front, back...) in the embodiment of the present application, the directional indication is only configured to explain the relationship between the components in a certain posture. If the specific posture changes, the directional indication will also change accordingly.

In addition, if there are descriptions involving "first", "second", etc. in the embodiments of the present application, the descriptions of "first", "second", etc. are only for descriptive purposes, and cannot be understood as indicating or implying their relative importance or implicitly indicating the number of indicated technical features. Thus, the features defined as "first" and "second" may explicitly or implicitly include at least one of these features. In addition, if "and/or" appears throughout the text, its meaning includes three parallel plans, taking "A and/or B" as an example, including plan A, or plan B, or A and B is a solution that is satisfied at the same time. In addition, the technical solutions of the various embodiments can be combined with each other, but it must be based on the realization of those skilled in the art. When the combination of technical solutions is contradictory or cannot be realized, it should be considered that the combination of technical solutions does not exist, nor within the protection scope required by the present application.

Existing fresh air equipment mainly consists of an indoor heat exchanger, a compressor and an outdoor heat exchanger to form a refrigerant circuit. In the cooling mode, the refrigerant flowing out of the compressor returns to the compressor through the outdoor heat exchanger and the indoor heat exchanger. In the heating mode, the refrigerant flowing out of the compressor returns to the compressor through the indoor heat exchanger and the outdoor heat exchanger. In the cooling and heating modes, the refrigerant flowing through the indoor heat exchanger flows in the opposite direction, which will cause that in a certain mode, the refrigerant flowing through the indoor heat exchanger is consistent with the air supply direction, while in another mode, the refrigerant flowing through the indoor heat exchanger is opposite to the air supply direction, which will affect the heat transfer capacity of the fresh air equipment.

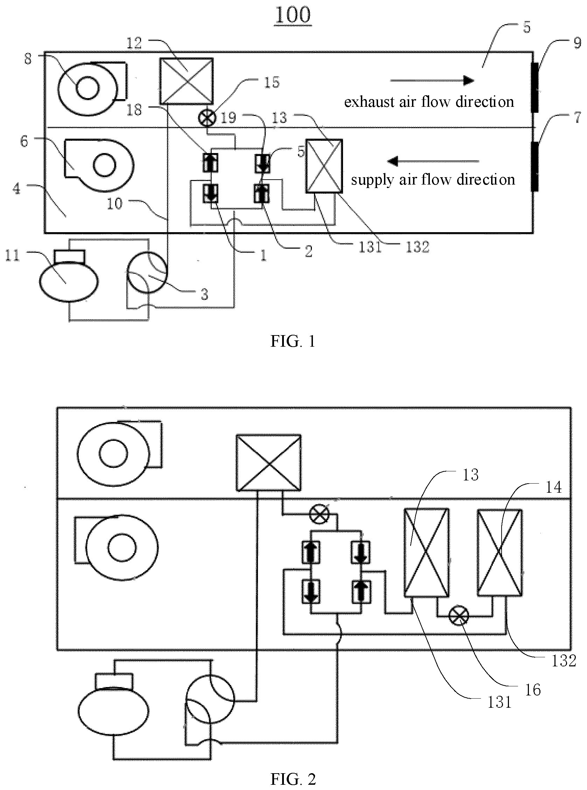

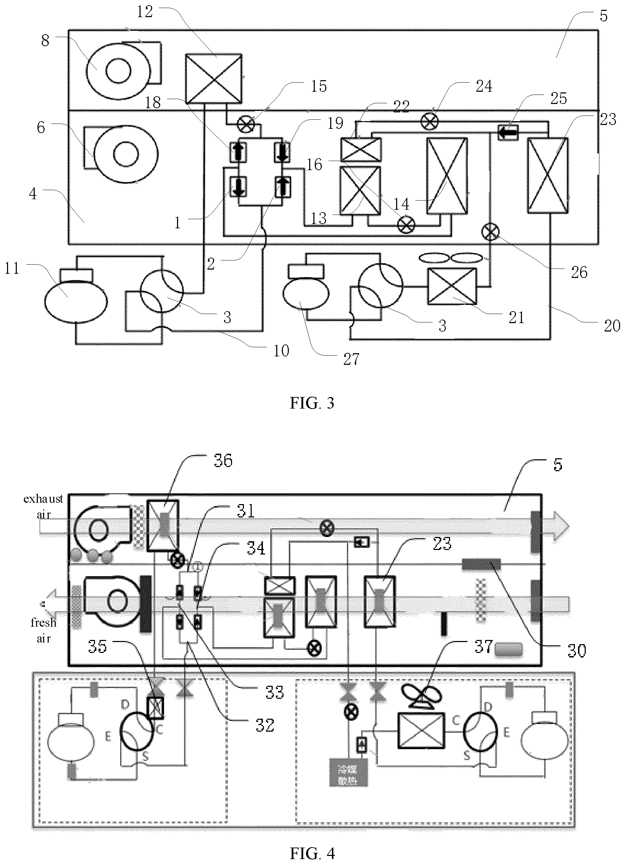

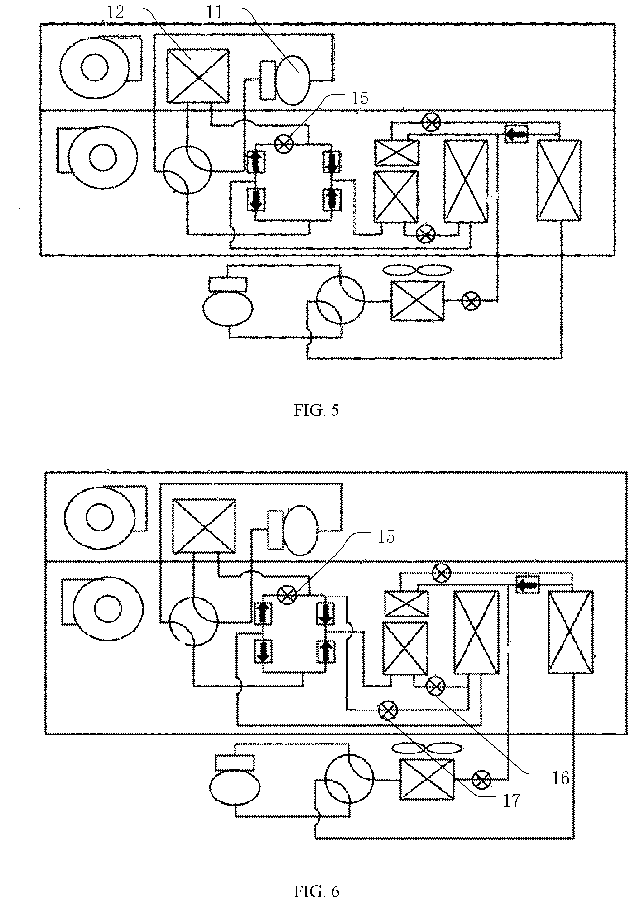

In order to solve the above problems, the present application provides a fresh air equipment 100. FIG. 1 is a schematic diagram of a first embodiment of the fresh air equipment provided by the present application; FIG. 2 is a schematic diagram of a second embodiment of the fresh air equipment provided by the present application; FIG. 3 is a schematic diagram of the third embodiment of the fresh air equipment provided by the present application; FIG. 4 is a schematic diagram of the fourth embodiment of the fresh air equipment provided by the present application; FIG. 5 is a schematic diagram of the fifth embodiment of the fresh air equipment provided by the present application; FIG. 6 is a schematic diagram of the sixth embodiment of the fresh air equipment provided by the present application.

Please referring to FIGS. 1 to 6, the fresh air equipment 100 includes a casing and a first heat exchange system 10. The casing is provided with an air supply channel 4. The first heat exchange system 10 includes: a fresh air heat exchanger structure and a first switching device; the fresh air heat exchanger structure is located in the air supply channel 4, and the fresh air heat exchanger structure has a refrigerant pipeline; the first switching device is connected with the fresh air heat exchanger structure, and the first switching device is configured to switch the flow direction of the refrigerant in the fresh air heat exchanger structure; in different operation modes of the first heat exchange system 10, the refrigerant of the first heat exchange system 10 first passes through the refrigerant pipeline located downstream of the air supply channel 4, and then passes through the refrigerant pipeline located upstream of the air supply channel 4.

It should be noted that the air supply channel 4 refers to the channel through which the fresh air equipment 100 sends outdoor fresh air into the room, and the exhaust channel 5 refers to the channel through which the fresh air equipment 100 discharges indoor air to the outdoors. The fresh air equipment 100 in the present application may be a single flow direction fresh air equipment 100, and the single flow direction fresh air equipment 100 refers to the fresh air equipment 100 with only the air supply channel 4; or the fresh air equipment 100 may be a double flow direction fresh air equipment 100, and the double flow direction fresh air equipment 100 refers to the fresh air equipment 100 having both the air supply channel 4 and the exhaust channel 5.

The structure of the fresh air heat exchanger can be a single heat exchanger, or it can be a plurality of heat exchangers connected in series. There is no limitation here. There can be many specific implementation forms of the first switching device, such as a four-way valve; the four valve ports of the four-way valve are respectively connected to the compressor, the heat exchanger, the refrigerant pipeline downstream of the air supply channel 4 of the fresh air heat exchanger structure, and the refrigerant pipeline located upstream of the air supply channel 4, so that whether it is the refrigerant flowing out of the compressor or the refrigerant flowing out of the heat exchanger, must first pass through the first switching device and then flow in from the refrigerant pipeline located downstream of the air supply channel 4 of the fresh air heat exchanger structure, and flow out from the refrigerant pipeline located upstream of the air supply channel 4 of the fresh air heat exchanger structure. In the same way, the first switching device may also be two three-way valves connected in series, or it may be four one-way valves, which are not limited here.

Moreover, it needs to be emphasized that the refrigerant flows in from the refrigerant pipeline downstream of the air supply channel 4 of the fresh air heat exchanger structure, and flows out from the refrigerant pipeline upstream of the air supply channel 4 of the fresh air heat exchanger structure. Its flow direction must be opposite to the air supply direction of the air supply channel 4. The heat exchange effect at this time is obviously better than the condition that the refrigerant flow direction is the same as the air supply direction of the air supply channel 4.

In any embodiment, by arranging the first switching device, in different operation modes, the refrigerant of the first heat exchange system 10 first passes through the refrigerant pipeline located downstream of the air supply channel 4, and then passes through the refrigerant pipeline located upstream of the air supply channel 4, so that the refrigerant in the fresh air heat exchanger structure is from the downstream of the air supply channel 4 to the upstream of the air supply channel 4. Compared with traditional fresh air equipment solutions, the heat exchange capacity of fresh air equipment is improved.

At the same time, the present application also proposes a fresh air equipment 100. The fresh air equipment 100 includes a casing and a first heat exchange system 10. The casing is provided with an air supply channel 4. The first heat exchange system 10 includes the fresh air heat exchanger structure and the first switching device. The fresh air heat exchanger structure is located in the air supply channel 4. The fresh air heat exchanger structure has a refrigerant circulation inlet 131 and a refrigerant circulation outlet 132; the first switching device is connected to both the refrigerant circulation inlet 131 and the refrigerant circulation outlet 132, and the first switching device is configured to switch the flow direction of the refrigerant in the fresh air heat exchanger structure; In the different operation modes of the first heat exchange system 10, the refrigerant of the first heat exchange system 10 flows into the fresh air heat exchanger structure through the refrigerant circulation inlet 131, and then flows out of the fresh air heat exchanger structure through the refrigerant circulation outlet 132.

In any embodiment, under different operation modes of the first heat exchange system 10, the refrigerant of the first heat exchange system 10 flows into the fresh air heat exchanger structure through the refrigerant circulation inlet 131, and then flows out of the fresh air heat exchanger structure through the refrigerant circulation outlet 132. With this arrangement, the refrigerant flow direction of the fresh air heat exchanger structure can be set to be counter-current to the air supply direction of the air supply channel 4, thereby improving the heat exchange capacity of the fresh air heat exchanger structure. Of course, for some special needs, the refrigerant flow direction of the fresh air heat exchanger structure can also be set to flow along the air supply direction of the air supply channel 4, thereby reducing the heat exchange capacity of the fresh air heat exchanger structure; for example, it turns out to be that the refrigerant flow direction in the fresh air heat exchanger structure is opposite to the air supply direction of the air supply channel 4 in the cooling mode. In the heating mode, the flow direction of the refrigerant in the the fresh air heat exchanger structure is the same as the air supply direction of the air supply channel 4. At this time, in order to weaken the cooling capacity of the fresh air equipment 100 and prevent the fresh air equipment 100 from adjusting the temperature in the environment to a lower level, the refrigerant flow direction of the fresh air heat exchanger structure is set to flow in the same direction as the air supply direction of the air supply channel 4 through the first switching device, thereby reducing the cooling capacity of the fresh air heat exchanger structure. Vice versa, it can also be, in the cooling mode, the refrigerant flow direction in the fresh air heat exchanger structure is the same as the air supply direction of the air supply channel 4. In the heating mode, the refrigerant flow direction in the fresh air heat exchanger structure is opposite to the air supply direction of the air supply channel 4. At this time, the heating capacity of the fresh air equipment 100 can be weakened and the fresh air equipment 100 can be prevented from adjusting the temperature in the environment to too high.

In order to enhance the heat exchange capacity of the fresh air equipment 100, the refrigerant circulation inlet 131 is located downstream of the air supply channel 4 relative to the refrigerant circulation outlet 132, so that the refrigerant flowing through the fresh air heat exchanger structure flows from the downstream of the air supply channel 4 to the upstream of the air supply channel 4, which is opposite to the air supply direction of the air supply channel 4. A countercurrent is formed between the two, which enhances the heat exchange capacity of the fresh air equipment.

Specifically, the fresh air heat exchanger structure is located in the first refrigerant flow path, and the first heat exchange system 10 also includes: a first compressor 11, a first heat exchange module 12 and a commutation device 3. The first compressor 11 is provided in the first refrigerant flow path and has a first exhaust port and a first return port; the first heat exchange module 12 is provided in the first refrigerant flow path and is connected with the first switching device; the commutation device 3 is connected with the first exhaust port, the first return port, the first heat exchange module 12 and the first switching device. The refrigerant device 3 is configured to switch the flow direction of the refrigerant, so that the refrigerant first passes through the first heat exchange module 12 and then passes through the first switching device, or so that the refrigerant passes through the first switching device first and then passes through the first heat exchange module 12; the first switching device communicates with the commutation device 3, the first heat exchange module 12, the refrigerant circulation inlet 131 of the fresh air heat exchanger structure, and the refrigerant circulation outlet 132 of the fresh air heat exchanger structure. The first switching device is configured to switch the flow direction of the refrigerant, so that the refrigerant first flows into the fresh air heat exchanger structure through the refrigerant circulation inlet 131, and then flows out of the fresh air heat exchanger structure through the refrigerant circulation outlet 132.

It should be noted that there are many specific implementation forms of the commutation device 3. For example, the most common one is a four-way valve, it can also be two three-way valves connected in series with each other, or it can be four one-way valves, etc.; no limitation is made here.

In the cooling mode, the refrigerant flows out from the first exhaust port of the first compressor 11, passes through the commutation device 3, and reaches the first heat exchange module 12 for heat exchange. The refrigerant flows into the refrigerant circulation inlet 131 of the fresh air heat exchanger structure under the function of the first switching device. After exchanging heat through the fresh air heat exchanger structure, the refrigerant flows out from the refrigerant circulation outlet 132, then returns to the commutation device 3 through the function of the first switching device, and finally flows back into the first compressor 11 from the first return port.

In the heating mode, the refrigerant flows out from the first exhaust port of the first compressor 11, passes through the commutation device 3, and reaches the first switching device. After the function of the first switching device, the refrigerant flows into the refrigerant circulation inlet 131 of the fresh air heat exchanger structure; after exchanging heat through the fresh air heat exchanger structure, the refrigerant flows out from the refrigerant circulation outlet 132; after exchanging heat with the first heat exchange module 12, and after the action of the first switching device, the refrigerant returns to the commutation device 3 and flows back into the first compressor 11 from the first return port.

In the solution of this implementation, by arranging the first switching device and the commutation device 3, no matter in the cooling mode, the heating mode, or the reheating and dehumidification mode, the refrigerant flows in from the refrigerant circulation inlet 131 of the fresh air heat exchanger structure, and flows out from the refrigerant circulation outlet 132 after heat exchange is performed through the fresh air heat exchanger structure, thereby ensuring that the flow direction of the refrigerant in different modes within the fresh air heat exchanger structure is consistent. At the same time, the refrigerant circulation inlet 131 and the refrigerant circulation outlet 132 can be positioned so that the flow direction of the refrigerant in the fresh air heat exchanger structure is opposite to or the same as the air supply direction of the air supply channel 4, thereby improving or reducing the heat exchange capacity of the fresh air equipment 100.

In some embodiments, when the fresh air equipment 100 is a single-flow fresh air equipment 100, the first compressor 11 is the outdoor unit of the fresh air equipment 100. When the fresh air equipment 100 is a dual-flow fresh air equipment 100, the casing is also provided with an exhaust channel 5. The first heat exchange module 12 is installed in the exhaust channel 5. The first compressor 11 is installed in the exhaust channel 5 or installed outside the casing. When the first heat exchange module 12 or the first compressor 11 is installed in the exhaust channel 5, the volume of the outdoor unit of the fresh air equipment 100 can be effectively reduced. Of course, when the first heat exchange module 12 and the first compressor 11 are both installed in the exhaust channel 5, the outdoor unit can be directly eliminated to save space.

In other embodiments, the fresh air equipment 100 further includes a second heat exchange system 20. A second refrigerant flow path is formed on the second heat exchange system 20. The second heat exchange system 20 includes the second outdoor heat exchanger 21, the second compressor 27, the third fresh air heat exchanger 22 and the fourth fresh air heat exchanger 23 provided in the second refrigerant flow path. The third fresh air heat exchanger 22 and the fourth fresh air heat exchanger 23 are both arranged in the air supply channel 4. At this time, the second outdoor heat exchanger 21 and the second compressor 27 can also be arranged in the exhaust channel 5, so that the fresh air equipment 100 does not require an outdoor unit at all, thus saving space.

Moreover, since the exhaust channel 5 discharges the heat-exchanged indoor air, its temperature is higher than the outdoor air in the heating mode, and the temperature is lower than the outdoor air in the cooling mode. In order to utilize and recover the heat of this part of the air, the casing is also provided with an exhaust channel 5. The first heat exchange module 12 includes a first outdoor heat exchanger 35 and a heat recovery heat exchanger 36 arranged in series. The heat recovery heat exchanger 36 is arranged in the exhaust channel 5; the first outdoor heat exchanger 35 is arranged outside the casing (host casing); and the first compressor 11 is installed in the exhaust channel 5 or installed outside the casing (host casing). In this way, the heat recovery heat exchanger 36 is installed in the exhaust channel 5, and the air in the exhaust channel 5 is discharged from the exhaust channel 5 after heat exchange with the heat recovery heat exchanger 36, so that the air discharged from the exhaust channel 5 can be thermally recovered.

At this time, the first switching device communicates with the commutation device 3, the heat recovery heat exchanger 36, the refrigerant circulation inlet 131 of the fresh air heat exchanger structure and the refrigerant circulation outlet 132 of the fresh air heat exchanger structure. In the cooling mode, the refrigerant flows out from the first exhaust port of the first compressor 11, passes through the commutation device 3, and reaches the first outdoor heat exchanger 35 of the first heat exchange module 12 and the heat recovery heat exchanger 36 in turn to perform heat exchange; after passing through the first switching device, the refrigerant flows into the refrigerant circulation inlet 131 of the fresh air heat exchanger structure; after exchanging heat through the fresh air heat exchanger structure, the refrigerant flows out from the refrigerant circulation outlet 132; and the refrigerant returns to the commutation device 3 through the action of the first switching device, and then flows back into the first compressor 11 from the first return port. In the heating mode, the refrigerant flows out from the first exhaust port of the first compressor 11, passes through the commutation device 3, and flows into the refrigerant circulation inlet 131 of the the fresh air heat exchanger structure after through the action of the first switching device. After exchanging heat through the fresh air heat exchanger structure, the refrigerant flows out from the refrigerant circulation outlet 132; after the heat is exchanged by the heat recovery heat exchanger 36 of the first heat exchange module 12 and the first outdoor heat exchanger 35, the refrigerant returns to the commutation device 3 through the action of the first switching device, and flows back into the first compressor 11 from the first return port.

At the same time, in order to throttle the refrigerant flowing out of the first heat exchange module 12 in the cooling mode and the refrigerant flowing into the first heat exchange module 12 in the heating mode, the first heat exchange system 10 also includes a first throttling element 15 provided on the first refrigerant flow path. The first throttling element 15 is located between the first heat exchange module 12 and the first switching device, so that in the cooling mode, the refrigerant flowing out of the first heat exchange module 12 is throttled by the first throttling element 15 and then flows into the refrigerant circulation inlet 131 through the first switching device. In the heating mode, the refrigerant flowing out of the refrigerant circulation outlet 132 passes through the first switching device, is throttled by the first throttling element 15 and then flows into the first heat exchange module 12, thereby realizing the control of throttling for the refrigerant flowing out from the first heat exchange module 12 in the cooling mode and the refrigerant flowing into the first heat exchange module 12 in the heating mode.

Moreover, in order to reduce the control components in the fresh air equipment 100 and improve the stability of the fresh air equipment 100, the first switching device has a first communication port 31, a second communication port 32, an inlet port 33 and an outlet port 34. The fresh air heat exchanger structure communicates with the outlet port 34 and the inlet port 33. The first switching device includes: a first one-way valve 18, a second one-way valve 19, a third one-way valve 1 and a fourth one-way valve 2. The first one-way valve 18 is connected between the first communication port 31 and the inlet port 33, and the first one-way valve 18 is conductive in the direction from the inlet port 33 to the first communication port 31; the second one-way valve 19 is connected between the first communication port 31 and the outlet port 34, and the second one-way valve 19 is conductive in the direction from the first communication port 31 to the outlet port 34; the third one-way valve 1 is connected between the inlet port 33 and the second communication port 32, and the third one-way valve 1 is conductive in the direction from the inlet port 33 to the second communication port 32; the fourth one-way valve 2 is connected between the outlet port 34 and the second communication port 32, and the fourth one-way valve 2 is conductive in the direction from the second communication port 32 to the outlet port 34. With this arrangement, the first switching device is entirely composed of one-way valves. Compared with the solution of a four-way valve or two three-way valves, no control components are required, and the fresh air equipment 100 has high stability.

It should be noted that the one-way valve allows fluid to flow only along the water inlet, but the medium at the water outlet cannot flow back. It is commonly known as a one-way valve. One-way valve is also called check valve. It is used in hydraulic systems to prevent the reverse flow of oil flow, or in pneumatic systems to prevent the reverse flow of compressed air. There are two types of check valves: straight-through type and right-angle type. The straight-through check valve is installed on the pipeline with a threaded connection. Right-angle check valves are available in three forms: threaded connection, plate connection and flange connection. The one-way valve in the present application can be a spring-type one-way valve, in which the liquid moves from bottom to top and relies on pressure to push up the valve disc controlled by the spring. After the pressure disappears, the spring force presses the valve disc down, sealing the liquid backflow. It can also be a gravity-type one-way valve, which is similar to the spring type and relies on the self-gravity of the valve disc to seal to prevent reverse flow, which is not limited here.

At this time, in order to realize that the flow direction of the refrigerant in the fresh air heat exchanger structure is opposite to the air supply direction of the air supply channel 4, specifically, in any embodiment, the inlet port 33 is connected to the refrigerant circulation outlet 132, and the outlet port 34 is connected to the refrigerant circulation inlet 131; the first communication port 31 is connected to the first heat exchange module 12, and the second communication port 32 is connected to the first compressor 11. In the cooling mode, the refrigerant flows out from the first exhaust port of the first compressor 11, passes through the commutation device 3 of the first compressor 11, and reaches the first heat exchange module 12 for exchange. The refrigerant then flows into the refrigerant circulation inlet 131 of the fresh air heat exchanger structure through the action of the second one-way valve 19. After exchanging heat through the fresh air heat exchanger structure, the refrigerant flows out from the refrigerant circulation outlet 132; then through the action of the third one-way valve 1, the refrigerant returns to the commutation device 3 of the first compressor 11, and then flows back into the first compressor 11 from the first return port.

In the heating mode, the refrigerant flows out from the first exhaust port of the first compressor 11, and passes through the commutation device 3 of the first compressor 11; through the action of the fourth one-way valve 2, the refrigerant flows into the refrigerant circulation inlet 131 of the fresh air heat exchanger structure; after exchanging heat through the fresh air heat exchanger structure, the refrigerant flows out from the refrigerant circulation outlet 132; after exchanging heat with the first heat exchange module 12, and then through the action of the first one-way valve 18, the refrigerant returns to the commutation device 3 of the first compressor 11, and flows back into the first compressor 11 from the first return port.

Of course, the outlet port 34 may also be connected to the refrigerant circulation outlet 132 of the fresh air heat exchanger structure, and the inlet port 33 may be connected to the refrigerant circulation inlet 131 of the fresh air heat exchanger structure, so that the flow direction of the refrigerant in the fresh air heat exchanger structure is the same as the air supply direction of the air supply channel 4, which weakens the heat exchange capability of the fresh air equipment 100, which is not limited here.

Please referring to FIGS. 1 and 2. At this time, in another embodiment, the first throttling element 15 and the first one-way valve 18 are arranged in series, and the first throttling element 15 is connected and arranged between the first communication port 31 and the first one-way valve 18. With this arrangement, the first throttling element 15 no longer throttles the refrigerant flowing out of the first heat exchange module 12 in the cooling mode. The refrigerant all flows into the fresh air heat exchanger structure to enhance its heat exchange capacity. In some embodiments, the fresh air heat exchanger structure includes at least two heat exchangers connected in series to achieve reheating and dehumidification function. At this time, the reheating and dehumidification function has the best effect.

The fresh air heat exchanger structure can have many specific forms. For the traditional fresh air equipment 100 that can only realize cooling and heating, the fresh air heat exchanger can only include the first fresh air heat exchanger 13. Of course, the fresh air heat exchanger can also be a plurality of interconnected heat exchangers, which is not limited here.

In order to realize the reheating and dehumidification function of the fresh air equipment 100, the fresh air heat exchanger structure includes a first fresh air heat exchanger 13 and a second fresh air heat exchanger 14 connected in series; the first fresh air heat exchanger 13 is located downstream of the air supply channel 4 opposite to the second fresh air heat exchanger 14; the outlet port 34 is connected to the first fresh air heat exchanger 13, and the inlet port 33 is connected to the second fresh air heat exchanger 14. With this arrangement, in the reheating and dehumidification mode, the first fresh air heat exchanger 13 acts as an evaporator to cool the air, and the second fresh air heat exchanger 14 acts as a condenser to heat the air, thereby achieving the reheating and dehumidification of the air.

At the same time, in order to ensure that the refrigerant flow direction in the first fresh air heat exchanger 13 and the second fresh air heat exchanger 14 remains unchanged, the outlet port 34 is connected to the first fresh air heat exchanger 13, and the inlet port 33 is connected to the second fresh air heat exchanger 14, so that the refrigerant flows in from the refrigerant inlet of the first fresh air heat exchanger 13 and flows out through the refrigerant outlet of the second fresh air heat exchanger 14. Moreover, in order to ensure that the flow direction of the refrigerant in the first fresh air heat exchanger 13 and the second fresh air heat exchanger 14 is opposite to the air supply direction of the air supply channel 4, so as to improve the heat exchange capacity of the fresh air equipment 100, the refrigerant circulation inlet 131 is the refrigerant inlet of the first fresh air heat exchanger 13, and the refrigerant circulation outlet 132 is the refrigerant outlet of the second fresh air heat exchanger 14.

Moreover, in order to throttle the refrigerant flowing out of the first fresh air heat exchanger 13, the first heat exchange system 10 also includes a second throttling element 16, and the second throttling element 16 is provided on the flow path connected in series between the first fresh air heat exchanger 13 and the second fresh air heat exchanger 14, so that the refrigerant flowing out of the first fresh air heat exchanger 13 can be throttled.

Please referring to FIG. 6, furthermore, in order to control the reheating capacity, the first heat exchange module 12 and the second fresh air heat exchanger 14 can also be connected. The first heat exchange system 10 also includes a third throttling element 17, and the third throttling element 17 is located on the flow path connected between the refrigerant inlet of the second fresh air heat exchanger 14 and the first heat exchange module 12. With this arrangement, in the cooling mode, when it is desired to increase the reheating capacity, it is only necessary to reduce the opening degree of the third throttling element 17, reduce the amount of refrigerant directly flowing into the second fresh air heat exchanger 14 from the first heat exchange module 12, and increase the amount of refrigerant directly flowing into the first fresh air heat exchanger 13 from the heat exchange module 12. When it is desirable to reduce the reheating capacity, you only need to reduce the opening degree of the second throttling element 16, thereby increasing the amount of refrigerant directly flowing into the second fresh air heat exchanger 14 from the first heat exchange module 12, reducing the amount of refrigerant directly flowing into the first fresh air heat exchanger 13 from the first heat exchange module 12, and reducing the reheating capacity.

Due to the existence of the first heat exchange module 12 and the second fresh air heat exchanger 14, in the cooling mode, the refrigerant flows through the first heat exchange module 12 to exchange heat with the hot air for cooling, and then flows through the second fresh air heat exchanger 14 to exchange heat with the indoor hot air for cooling. In the two heat exchanges, the pressure difference between the two indoor heat exchangers on the refrigerant flow path is large, and the refrigerant flowing through the first heat exchanger has higher pressure and higher temperature, so that the cooling effect is also poor.

Therefore, the third throttling element 17 is provided. By adjusting the opening degree of the third throttling element 17, the refrigerant can be divided into two branches in the cooling mode and flow through the first heat exchange module 12 and the second fresh air heat exchanger 14 respectively, allowing part of the pressure to be distributed to the first heat exchange module 12, so that the pressure difference between the first heat exchange module 12 and the second fresh air heat exchanger 14 decreases, thereby causing the temperature and pressure of the refrigerant flowing through the first heat exchange module 12 and the second fresh air heat exchanger 14 to decrease. During the refrigeration and heat exchange process, the heat exchange refrigeration energy efficiency is higher to solve the current problem that some fresh air equipment systems with reheating and dehumidification have poor cooling effect in cooling mode.

In addition, in order to enhance the air supply effect, the fresh air equipment 100 also includes a air supply fan 6. The air supply fan 6 is provided in the air supply channel 4, and the air blower of the air supply fan 6 is directed indoors, so that the heat-exchanged air in the air supply channel 4 is sent into the room. The position of the air supply fan 6 can be any position in the air supply channel 4, as long as its air supply outlet faces the room.

At the same time, the fresh air equipment 100 may also include an air supply valve 7. The air supply valve 7 is provided in the air supply channel 4. The air supply valve 7 is configured to connect the outdoors and the air supply channel 4. Of course, the air supply fan 6 and the air supply valve 7 can be installed selectively. In order to pursue the best air supply effect, both of them can also be installed, which is not limited here.

At the same time, when the fresh air equipment 100 is a dual-flow fresh air equipment 100, an exhaust channel 5 is also provided in the casing. The function of the exhaust channel 5 is to discharge indoor air to the outdoors. The fresh air equipment 100 also includes an exhaust fan 8, which is provided in the exhaust channel 5, and the exhaust port of the exhaust fan 8 is directed toward the outdoors, thereby exhausting indoor air to the outdoors.

At the same time, the fresh air equipment 100 may also include an exhaust valve 9. The exhaust valve 9 is provided at one end of the exhaust channel 5, and the exhaust valve 9 is configured to communicate with the outside. The exhaust fan 8 and the exhaust valve 9 can be installed alternatively. Of course, in order to pursue the best exhaust effect, both can also be installed, and there is no limitation here.

More specifically, the exhaust channel 5 includes an indoor return air outlet and an outdoor exhaust outlet, and the air supply channel 4 includes an outdoor air inlet and an indoor air supply outlet. The exhaust fan 8 is provided close to the indoor return air outlet; the exhaust valve 9 is set at the outdoor exhaust outlet; the air supply fan 6 is set close to the indoor air supply outlet; and the air supply valve 7 is set at the outdoor air inlet. With this arrangement, the exhaust fan 8 is provided close to the indoor return air outlet, and can directly discharge the indoor air from the exhaust channel 5 through the indoor return air outlet. The air supply fan 6 is provided close to the indoor air supply outlet, which can directly send the fresh air in the air supply channel 4 into the room from the indoor air supply outlet. The exhaust valve 9 is set at the outdoor exhaust outlet, and the opening and closing of the exhaust channel 5 can be controlled only by controlling the opening and closing of the exhaust valve 9. The exhaust valve 9 is set at the outdoor exhaust outlet, and only the opening and closing of the air supply valve 7 can be controlled to control the opening and closing of the air supply channel 4.

Moreover, in a certain embodiment, the casing is formed with a communication port that connects the exhaust channel 5 and the air supply channel 4, and the communication port is located upstream of the fresh air heat exchanger structure and located upstream of the heat recovery heat exchanger 36. It should be emphasized that the upstream and downstream referred to here refer to the upstream and downstream in the air supply direction. The fresh air equipment 100 also includes a bypass ventilation valve 30. The bypass ventilation valve 30 is provided at the communication port, so that the exhaust channel 5 and the air supply channel 4 can be connected through the communication port, and the bypass ventilation valve 30 is provided at the communication port. When fresh air needs to be sent in, the bypass valve is closed and the air supply valve 7 is opened, so that the fresh air enters the room from the indoor air supply port. In order to achieve rapid indoor cooling or heating, it is often necessary to carry out an indoor internal circulation, that is, no fresh air is needed. At this time, the air supply valve 7 can be closed to prevent outdoor fresh air from entering the air supply channel 4 from the outdoor air inlet, and then the bypass ventilation valve 30 can be opened. At this time, the heat exchanged air in the air supply channel 4 is the air discharged from the room into the exhaust channel 5 to achieve cyclic heat exchange of the indoor air and quickly heat or cool the indoor air. Of course, at this time, the exhaust valve 9 can also be closed to completely isolate indoor and outdoor air, which can achieve better cooling or heating effects and achieve internal circulation of indoor air.

Please referring to FIGS. 3 to 6, at the same time, in order to improve the cooling energy efficiency, the fresh air equipment 100 also includes a second heat exchange system 20. A second refrigerant flow path is formed on the second heat exchange system 20. The second heat exchange system 20 includes a second outdoor heat exchanger 21, a third fresh air heat exchanger 22 and a fourth fresh air heat exchanger 23 which are sequentially arranged in series in the second refrigerant flow path. The third fresh air heat exchanger 22 and the fourth fresh air heat exchanger 23 are both located in the air supply channel 4.

With this arrangement, there are two sets of heat exchange systems. There are two evaporators in the fresh air channel, with two evaporation temperatures. The upstream evaporation temperature is higher than the downstream evaporation temperature. The two-stage evaporative refrigeration solution is greatly improved of energy consumption compared to the one-stage evaporative refrigeration solution. Moreover, the upstream heat exchange system can preheat or precool the air, and then get through the heat exchange of the downstream heat exchange system. At this time, it can effectively reduce the outlet air temperature in the cooling mode, and increase the outlet air temperature in the heating mode. Of course, the upstream heat exchange system can also cool the air, and the downstream heat exchange system can heat the air, thereby realizing the reheating and dehumidification function.

It should be noted that in an ordinary reheating and dehumidifying fresh air equipment system, there are two indoor heat exchangers. In the heating mode, the cold air first exchanges heat with one of the heat exchangers, and then with the second heat exchanger; it is difficult for the second heat exchanger to effectively heat the air. Many tests have shown that the second heat exchanger not only has no heating effect, but will actually reduce the air temperature.

Therefore, the second heat exchange system 20 further includes a second switching device for switching the second outdoor heat exchanger 21 to connect to the third fresh air heat exchanger 22, or to simultaneously connect to the third fresh air heat exchanger 22 and the fourth fresh air heat exchanger 23.

The second switching device can have many specific forms, and can be a four-way valve. The four valve ports of the four-way valve are respectively connected to the two communication ports of the third fresh air heat exchanger 22 and the fourth fresh air heat exchanger 23 and the second outdoor heat exchanger 21. In the heating mode, the two communication ports of the third fresh air heat exchanger 22 are directly connected, or the two communication ports of the third fresh air heat exchanger are directly closed. Then the second outdoor heat exchanger 21 and the fourth fresh air heat exchanger 23 are connected. At this time, the refrigerant flows out from the second compressor 27, passes through the four-way valve of the second compressor 27, and reaches the fourth fresh air heat exchanger 23. After heat exchange, it flows into the second outdoor heat exchanger 21 and returns to the second compressor 27 after passing through the four-way valve of the second compressor 27. In the cooling and reheating dehumidification modes, the refrigerant of the second compressor 27 flows out of the second compressor 27, passes through the four-way valve of the second compressor 27, the second outdoor heat exchanger 21, the third fresh air heat exchanger 22 and the fourth fresh air heat exchanger 23 in sequence, and returns to the four-way valve of the second compressor 27 and flows back to the second compressor 27 to complete the refrigeration cycle.

The second switching device may also be a combination of a throttling element and a one-way valve, or a combination of two throttling elements, etc., which is not limited here.

In the technical solution provided by the present application, by arranging the second switching device, in the cooling mode or in the reheating and dehumidification mode, the second outdoor heat exchanger 21 is simultaneously connected with the fourth fresh air heat exchanger 23 and the third fresh air heat exchanger 22 to realize the reheating and dehumidification function or the cooling function. In the heating mode, the second outdoor heat exchanger 21 is connected with the fourth fresh air heat exchanger 23, so that the refrigerant no longer passes through the third heat exchanger 22, thereby preventing the third heat exchanger 22 from cooling the air, improving the heating effect of the fresh air equipment 100, and also reducing the energy consumption of the fresh air equipment 100 in the heating mode.

At the same time, the arrangement direction of the third fresh air heat exchanger 22 and the fourth fresh air heat exchanger 23 is opposite to the air supply direction of the air supply channel 4. With this arrangement, in the cooling and reheating and dehumidification mode, the flow direction of the refrigerant flowing through the third fresh air heat exchanger 22 and the fourth fresh air heat exchanger 23 is opposite to the air supply direction of the air supply channel 4. A counterflow occurs between the refrigerant and the air, which enhances the heat exchange capabilities of the third fresh air heat exchanger 22 and the fourth fresh air heat exchanger 23. In the heating mode, a downstream flow is formed between the refrigerant in the fourth fresh air heat exchanger 23 and the air in the air supply channel 4, but at this time, the refrigerant no longer passes through the third fresh air heat exchanger 22, which avoids the influence of the third fresh air heat exchanger 22 on the air, thereby improving the cooling and heating capabilities of the fresh air equipment 100, and reducing the energy consumption of the fresh air equipment 100 in the heating mode.

The second switching device can have many specific forms, and can be a combination of a throttling element and a one-way valve, or a combination of two throttling elements, etc. In order to improve the stability of the fresh air equipment 100, the second switching device includes a fourth throttling element 24 and a fifth one-way valve 25 (the fifth one-way valve 25 can be replaced by a solenoid valve); the fourth throttling element 24 is provided on the second refrigerant flow path, and between the third fresh air heat exchanger 22 and the fourth fresh air heat exchanger 23; the fifth one-way valve 25, the third fresh air heat exchanger 22 and the fourth throttling element 24 are arranged in parallel, and the conduction direction of the fifth one-way valve 25 is from the fourth fresh air heat exchanger 23 to the second outdoor heat exchanger 21.

With this arrangement, in the cooling mode or the reheating and dehumidification mode, the refrigerant flows out from the second compressor 27 and reaches the third fresh air heat exchanger 22 via the second outdoor heat exchanger 21 for heat exchange, then throttles through the fourth throttling element 24, reaches the fourth fresh air heat exchanger 23 for heat exchange, and then returns to the second compressor 27 to complete the refrigeration cycle. In the heating mode, the fourth throttling element 24 is closed; the refrigerant flows out from the second compressor 27, and directly flows into the fourth fresh air heat exchanger 23 through the fifth one-way valve 25; the refrigerant flows into the second outdoor heat exchanger 21 after exchanging heat through the fourth fresh air heat exchanger 23, and finally returns to the second compressor 27 to complete the refrigeration cycle. Using the fourth throttling element 24 and the fifth one-way valve 25 as the second switching device solution, which effectively reduces the use of control components and improves the stability of the second switching device compared to the four-way valve solution, thereby improving the stability of the fresh air equipment 100.

Of course, in some other embodiments, the fifth one-way valve 25 can also be replaced with a throttling element. In the cooling or reheating dehumidification mode, the throttling element is closed. In the heating mode, the fourth throttling element 24 is closed, and the fifth one-way valve 25 is opened and replaced, so that the same effect can be achieved.

Of course, the fifth one-way valve 25 can also be replaced with a solenoid valve. In the cooling or reheating and dehumidification mode, the solenoid valve is closed. In the heating mode, the fourth throttling element 24 is closed, and opened to replace the the solenoid valve of the fifth one-way valve 25, so that the same effect can be achieved.

At the same time, there are two indoor heat exchangers in the second heat exchange system 20. In the cooling mode, the refrigerant flows through the first heat exchanger to exchange heat with the hot air for cooling, and then flows through the second heat exchanger to exchange heat with indoor hot air for cooling. In the two heat exchanges, the pressure difference between the two indoor heat exchangers on the refrigerant flow path is larger; the pressure of the refrigerant flowing through the first heat exchanger is larger and the temperature is higher; and its cooling effect is also poor.

Therefore, at this time, the fifth one-way valve 25 is replaced with a throttling element. With this arrangement, by adjusting the opening degree of the throttling element, the refrigerant can be divided into two branches in the cooling mode. The refrigerant flows through the third fresh air heat exchanger 22 and the fourth fresh air heat exchanger 23 respectively, so that part of the pressure is distributed to the third fresh air heat exchanger 22, so that the pressure difference between the third fresh air heat exchanger 22 and the fourth fresh air heat exchanger 23 decreases, causing the temperature and pressure of the refrigerant flowing through the third fresh air heat exchanger 22 and the fourth fresh air heat exchanger 23 to decrease. During the refrigeration and heat exchange process, heat exchange refrigeration is more energy efficient to solve the problem of poor cooling effect in existing reheating and dehumidification fresh air equipment systems in the cooling mode.

In order to throttle the refrigerant flowing out of the second outdoor heat exchanger 21 in the cooling mode or the reheating and dehumidification mode, the second heat exchange system 20 also includes a fifth throttling element 26. The fifth throttling element 26 is provided on the second refrigerant flow path and between the third fresh air heat exchanger 22 and the second outdoor heat exchanger 21.

Therefore, in the cooling mode or the reheating and dehumidification mode, the refrigerant flowing out of the second outdoor heat exchanger 21 enters the third fresh air heat exchanger 22 through the throttling of the fifth throttling element 26.

At the same time, the fifth one-way valve 25 may be connected between the third fresh air heat exchanger 22 and the fourth throttling element 24.

At this time, in the heating mode, the refrigerant flowing out of the fourth fresh air heat exchanger 23, through the throttling of the fifth throttling element 26, enters the second outdoor heat exchanger 21, and returns to the second compressor 27.

Of course, it is also possible that the fifth one-way valve 25 is connected between the second outdoor heat exchanger 21 and the fourth throttling element 24; the refrigerant flowing out of the fourth fresh air heat exchanger 23, without throttling by the fifth throttling element 26, enters the second outdoor heat exchanger 21, and returns to the second compressor 27.

No limitation is made here.

In some embodiments, the casing is also provided with an exhaust channel 5, and the second outdoor heat exchanger 21 is installed in the exhaust channel 5; and/or, the second compressor 27 is installed in the exhaust channel 5. When the second outdoor heat exchanger 21 or the second compressor 27 is installed in the exhaust channel 5, the volume of the outdoor unit of the fresh air equipment 100 can be effectively reduced. Of course, when the second outdoor heat exchanger 21 and the second compressor 27 are both installed in the exhaust channel 5, the outdoor unit can be directly eliminated to save space.

Of course, the first outdoor heat exchanger 35 and the first compressor 11 of the first heat exchange system and the second outdoor heat exchanger 21 and the second compressor 27 of the second heat exchange system are all arranged in the exhaust channel 5, so there is no need to install an outdoor unit of the fresh air equipment.

Moreover, the second fresh air heat exchanger 14 is located between the third fresh air heat exchanger 22 and the fourth fresh air heat exchanger 23. In this arrangement, in the cooling mode, the air achieves three heat exchanges in the air supply channel 4, which can improve the cooling energy efficiency of the fresh air equipment 100, or improve the reheating capacity of the fresh air equipment 100.

At the same time, the first fresh air heat exchanger 13 and the third fresh air heat exchanger 22 can also be arranged in parallel in the width direction or height direction of the air supply channel 4, thereby effectively reducing the volume of the fresh air equipment 100.

It is also possible that the first fresh air heat exchanger 13 and the third fresh air heat exchanger 22 jointly block the cross section of the air supply channel 4 at the first fresh air heat exchanger 13. In this case, the first fresh air heat exchanger 13 and the third fresh air heat exchanger 22 simultaneously exchange heat for the air in the air supply channel 4, and jointly shield the cross section of the air supply channel 4 at the first fresh air heat exchanger 13, thereby ensuring that the air flowing through the air supply channel 4 exchanges heat with at least one of the first fresh air heat exchanger 13 or the third fresh air heat exchanger 22.

Of course, it is also possible to simultaneously place the second fresh air heat exchanger 14 between the third fresh air heat exchanger 22 and the fourth fresh air heat exchanger 23, and the first fresh air heat exchanger 13 and the third fresh air heat exchanger 22 are arranged in parallel in the width direction of the air supply channel 4. The first fresh air heat exchanger 13 and the third fresh air heat exchanger 22 jointly block the cross section of the air supply channel 4 at the first fresh air heat exchanger 13.

The first fresh air heat exchanger 13 and the third fresh air heat exchanger 22 form a heat exchange module, and the cross-sectional area of the heat exchange module, the cross-sectional area of the second fresh air heat exchanger 14 and the cross-sectional area of the fourth fresh air heat exchangers 23 are equal. The cross-sectional area of the second fresh air heat exchanger 14 is larger than the cross-sectional area of the third fresh air heat exchanger 22.

Due to the simultaneous existence of the first heat exchange system 10 and the second heat exchange system 20, it is often necessary to install two outdoor units for the first heat exchange system 10 and the second heat exchange system 20. With this arrangement, the installation of the two outdoor units needs to occupy two outdoor unit positions, which requires too much space, and the installation workload of the two outdoor machines is also relatively large. Therefore, the casing includes a main body casing and an outdoor unit casing. The air supply channel 4 and the exhaust channel 5 are provided in the main body casing. The first heat exchange system 10 also includes a first compressor 11 and the first heat exchange module 12. The first heat exchange module 12 includes a first outdoor heat exchanger 35 and a heat recovery heat exchanger arranged in series; the heat recovery heat exchanger is arranged in the exhaust channel 5, and the fourth fresh air heat exchanger 23 is arranged in the air supply channel 4; the first compressor 11, the first outdoor heat exchanger 35, the second compressor 27, the second outdoor heat exchanger 21 and the outdoor fan 37 are all arranged in the outdoor unit casing. With this arrangement, the heat recovery heat exchanger is arranged in the exhaust channel 5; the fourth fresh air heat exchanger 23 is arranged in the air supply channel 4; the first compressor 11, the first outdoor heat exchanger 35, the second compressor 27, the second outdoor heat exchanger 21 and the outdoor fan 37 are all arranged in the outdoor unit casing; the components of a part of the outdoor unit are arranged in the exhaust channel 5, and the remaining components are arranged in the casing of the outdoor unit. Only one outdoor unit is needed to satisfy the first heat exchange system 10 and the second heat exchange system 20, which reduces the space occupied by the outdoor unit and also reduces the workload of installing the outdoor unit.

At the same time, the first outdoor heat exchanger 35 and the second outdoor heat exchanger 21 are connected and arranged opposite to the outdoor fan 37. In this way, the first outdoor heat exchanger 35 is arranged on the second outdoor heat exchanger 21 as a whole, and the outdoor fan 37 dissipates heat to the whole. Only one outdoor fan 37 is needed to dissipate heat to two outdoor heat exchangers at the same time. The first outdoor heat exchanger 35 can be provided at the top, bottom or side of the second outdoor heat exchanger 21, and the outdoor fan 37 is configured to dissipate heat to the first outdoor heat exchanger 35 and the second outdoor heat exchanger 21 at the same time.

The above are only some embodiments of the present application, and do not limit the patent scope of the present application. Under the inventive concept of the present application, the equivalent structural transformations made by using the description of the present application and the contents of the accompanying drawings, or directly/indirectly used in other relevant technical fields, are all included in the protection scope of the present application.

## Claims

1. A fresh air equipment, **characterized by** comprising:
a casing; and
a first heat exchange system;
wherein an air supply channel is provided in the casing, and the first heat exchange system comprises:
a fresh air heat exchanger structure, wherein the fresh air heat exchanger structure is located in the air supply channel, and the fresh air heat exchanger structure is provided with a refrigerant pipeline; and
a first switching device, wherein the first switching device is connected to the fresh air heat exchanger structure, and the first switching device is configured to switch a flow direction of refrigerant in the fresh air heat exchanger structure;
wherein, in different operation modes of the first heat exchange system, the refrigerant of the first heat exchange system is first configured to pass through the refrigerant pipeline located downstream of the air supply channel, and then configured to pass through the refrigerant pipeline located upstream of the air supply channel.

2. A fresh air equipment, **characterized by** comprising:
a casing; and
a first heat exchange system;
wherein an air supply channel is provided in the casing, and the first heat exchange system comprises:
a fresh air heat exchanger structure, wherein the fresh air heat exchanger structure is located in the air supply channel, and the fresh air heat exchanger structure is provided with a refrigerant circulation inlet and a refrigerant circulation outlet; and
a first switching device, wherein the first switching device is communicated with both the refrigerant circulation inlet and the refrigerant circulation outlet, and the first switching device is configured to switch a flow direction of refrigerant in the fresh air heat exchanger structure;
wherein, in different operation modes of the first heat exchange system, the refrigerant of the first heat exchange system is configured to flow into the fresh air heat exchanger structure through the refrigerant circulation inlet, and then configured to flow out of the fresh air heat exchanger structure through the refrigerant circulation outlet.

3. The fresh air equipment according to claim 2, wherein the refrigerant circulation inlet is located downstream of the air supply channel relative to the refrigerant circulation outlet.

4. The fresh air equipment according to claim 1 or 2, wherein a first refrigerant flow path is formed in the first heat exchange system; the fresh air heat exchanger structure is located in the first refrigerant flow path, and the first heat exchange system further comprises:
a first compressor disposed in the first refrigerant flow path and provided with a first exhaust port and a first return port;
a first heat exchange module provided in the first refrigerant flow path and communicated with the first switching device; and
a commutation device communicated with the first exhaust port, the first return port, the first heat exchange module and the first switching device; wherein the commutation device is configured to switch the flow direction of the refrigerant so that the refrigerant is first configured to pass through the first heat exchange module and then configured to pass through the first switching device, or, so that the refrigerant is first configured to pass through the first switching device and then configured to pass through the first heat exchange module;
wherein the first switching device is communicated with the commutation device, the first heat exchange module, the refrigerant circulation inlet of the fresh air heat exchanger structure, and the refrigerant circulation outlet of the fresh air heat exchanger structure; the first switching device is configured to switch the flow direction of the refrigerant, so that the refrigerant is first configured to flow into the fresh air heat exchanger structure through the refrigerant circulation inlet, and then configured to flow out of the fresh air heat exchanger structure through the refrigerant circulation outlet.

5. The fresh air equipment according to claim 4, wherein the casing is further provided with an exhaust channel; the first heat exchange module is installed in the exhaust channel, and the first compressor is installed in the exhaust channel or installed outside the casing.

6. The fresh air equipment according to claim 5, wherein the air supply channel is such a channel that is configured to send outdoor fresh air into indoors by the fresh air equipment, and the exhaust channel is such a channel that is configured to discharge indoor air to outdoors by the fresh air equipment.

7. The fresh air equipment according to claim 4, wherein the casing is further provided with an exhaust channel, and the first heat exchange module comprises a first outdoor heat exchanger and a heat recovery heat exchanger arranged in series; the heat recovery heat exchanger is arranged in the exhaust channel, and the first outdoor heat exchanger is arranged outside the casing; the first compressor is installed in the exhaust channel or outside the casing.

8. The fresh air equipment according to claim 4, wherein the first heat exchange system further comprises a first throttling element provided in the first refrigerant flow path, and the first throttling element is located between the first heat exchange module and the first switching device.

9. The fresh air equipment according to claim 1 or 2, wherein the first switching device comprises a first communication port, a second communication port, an inlet port and an outlet port, and the fresh air heat exchanger structure is communicated with the outlet port and the inlet port; the first switching device comprises:
a first one-way valve connected between the first communication port and the inlet port, wherein the first one-way valve is configured to conduct in a direction from the inlet port to the first communication port;
a second one-way valve connected between the first communication port and the outlet port, wherein the second one-way valve is configured to conduct in a direction from the first communication port to the outlet port;
a third one-way valve connected between the inlet port and the second communication port, wherein the third one-way valve is configured to conduct in a direction from the inlet port to the second communication port; and
a fourth one-way valve connected between the outlet port and the second communication port, wherein the fourth one-way valve is configured to conduct in a direction from the second communication port to the outlet port.

10. The fresh air equipment according to claim 9, wherein the first heat exchange system further comprises a first throttling element; the first throttling element and the first one-way valve are arranged in series, and the first throttling element is provided between the first communication port and the first one-way valve.

11. The fresh air equipment according to claim 9, wherein the outlet port is communicated to the refrigerant circulation inlet of the fresh air heat exchanger structure, and the inlet port is communicated to the refrigerant circulation outlet of the fresh air heat exchanger structure; the first communication port is communicated to the first heat exchange module, and the second communication port is communicated to the first compressor.

12. The fresh air equipment according to claim 11, wherein the fresh air heat exchanger structure comprises a first fresh air heat exchanger and a second fresh air heat exchanger arranged in series, and the first fresh air heat exchanger is located downstream of the air supply channel relative to the second fresh air heat exchanger; the outlet port is connected to the first fresh air heat exchanger, and the inlet port is connected to the second fresh air heat exchanger.

13. The fresh air equipment according to claim 12, wherein the first heat exchange system further comprises a second throttling element, and the second throttling element is provided on a flow path connected in series between the first fresh air heat exchanger and the second fresh air heat exchanger.

14. The fresh air equipment according to claim 12, wherein the first heat exchange system further comprises a third throttling element, and the third throttling element is located on a flow path communicated between the refrigerant inlet of the second fresh air heat exchanger and the first communication port.

15. The fresh air equipment according to claim 1 or 2, wherein the casing is further provided with an exhaust channel;
the fresh air equipment also comprises an exhaust fan; the exhaust fan is provided in the exhaust channel, and the exhaust fan is configured to exhaust air outdoors; and/or
the fresh air equipment also comprises an exhaust valve, and the exhaust valve is provided in the exhaust channel; and/or
the fresh air equipment also comprises an air supply fan; the air supply fan is provided in the air supply channel, and the air supply fan is configured to blow air indoors; and/or
the fresh air equipment also comprises an air supply valve, and the air supply valve is provided in the air supply channel.

16. The fresh air equipment according to claim 15, wherein the exhaust channel comprises an indoor return air outlet and an outdoor exhaust outlet, and the air supply channel comprises an outdoor air inlet and an indoor air supply outlet; the exhaust fan is provided close to the indoor return air outlet, and the exhaust valve is arranged at the outdoor exhaust outlet; the air supply fan is arranged close to the indoor air supply outlet, and the air supply valve is arranged at the outdoor air inlet.

17. The fresh air equipment according to claim 16, wherein the casing is formed with a communication port communicating the exhaust channel and the air supply channel, and the communication port is located upstream of the fresh air heat exchanger structure; the fresh air equipment also comprises a bypass ventilation valve, and the bypass ventilation valve is provided at the communication port.

18. A fresh air equipment, **characterized by** comprising: a casing and a second heat exchange system; wherein an air supply channel is provided in the casing, and a second refrigerant flow path is formed on the second heat exchange system; the second heat exchange system comprises:
a second outdoor heat exchanger, a third fresh air heat exchanger and a fourth fresh air heat exchanger arranged in the second refrigerant flow path; wherein the third fresh air heat exchanger and the fourth fresh air heat exchanger are both arranged in the air supply channel; and
a second switching device configured to switch the second outdoor heat exchanger to communicate with the third fresh air heat exchanger ,or configured to communicate with the third fresh air heat exchanger and the fourth fresh air heat exchanger at the same time.

19. The fresh air equipment according to claim 18, wherein the second switching device further comprises a fourth throttling element and a fifth one-way valve; the fourth throttling element is provided on the second refrigerant flow path, and located between the third fresh air heat exchanger and the fourth fresh air heat exchanger; and
the fifth one-way valve is arranged in parallel with the third fresh air heat exchanger and the fourth throttling element, and a conducting direction of the fifth one-way valve is from the fourth fresh air heat exchanger to the second outdoor heat exchanger.

20. The fresh air equipment according to claim 18, wherein the second switching device further comprises a fourth throttling element and a fifth one-way valve; the fourth throttling element is provided on the second refrigerant flow path, and the fifth one-way valve is communicated between the second outdoor heat exchanger and the fourth throttling element.

21. The fresh air equipment according to claim 18, wherein the second heat exchange system further comprises a fifth throttling element, and the fifth throttling element is provided on the second refrigerant flow path and located between the third fresh air heat exchanger and the second outdoor heat exchanger.

22. The fresh air equipment according to claim 18, wherein an arrangement direction of the third fresh air heat exchanger and the fourth fresh air heat exchanger is opposite to an air supply direction of the air supply channel.

23. The fresh air equipment according to claim 18, wherein the casing is further provided with an exhaust channel, and the second heat exchange system further comprises a second compressor provided on the second refrigerant flow path; and
the second outdoor heat exchanger is installed in the exhaust channel, and the second compressor is installed in the exhaust channel or outside the casing.

24. The fresh air equipment according to claim 18, wherein the fresh air equipment further comprises a first heat exchange system; the first heat exchange system comprises a fresh air heat exchanger structure and a first switching device, and the fresh air heat exchanger structure is located in the air supply channel;
the fresh air heat exchanger structure comprises a first fresh air heat exchanger and a second fresh air heat exchanger arranged in series;
the second fresh air heat exchanger is located between the third fresh air heat exchanger and the fourth fresh air heat exchanger; and/or
the first fresh air heat exchanger and the third fresh air heat exchanger are arranged in parallel in a width direction or height direction of the air supply channel; and/or
the first fresh air heat exchanger and the third fresh air heat exchanger are configured to jointly block a cross section of the air supply channel at the first fresh air heat exchanger.

25. The fresh air equipment according to claim 18, wherein the fresh air equipment further comprises a first heat exchange system, and the first heat exchange system comprises:
a fresh air heat exchanger structure located in the air supply channel, wherein the fresh air heat exchanger structure is provided with a refrigerant pipeline; and
a first switching device communicated to the fresh air heat exchanger structure, wherein the first switching device is configured to switch a flow direction of the refrigerant in the fresh air heat exchanger structure;
wherein, in different operation modes of the first heat exchange system, the refrigerant of the first heat exchange system is first configured to pass through the refrigerant pipeline located downstream of the air supply channel, and then configured to pass through the refrigerant pipeline located upstream of the air supply channel.

26. The fresh air equipment according to claim 18, further comprising:
a first heat exchange system, wherein the first heat exchange system comprises: a fresh air heat exchanger structure located in the air supply channel, wherein the fresh air heat exchanger structure is provided with a refrigerant circulation inlet and a refrigerant circulation outlet; and a first switching device communicated to both the refrigerant circulation inlet and the refrigerant circulation outlet, wherein the first switching device is configured to switch a flow direction of the refrigerant in the fresh air heat exchanger structure;
wherein, in different operation modes of the first heat exchange system, the refrigerant of the first heat exchange system is configured to flow into the fresh air heat exchanger structure through the refrigerant circulation inlet, and then configured to flow out of the fresh air heat exchanger structure through the refrigerant circulation outlet.

27. The fresh air equipment according to claim 1 or 2, further comprising:
a second heat exchange system; and
an outdoor fan;
wherein the second heat exchange system comprises a second compressor, a second outdoor heat exchanger and a fourth fresh air heat exchanger;
the casing comprises a main body casing and an outdoor unit casing, and the air supply channel and an exhaust channel are provided in the main body casing;
the first heat exchange system also comprises a first compressor and a first heat exchange module, and the first heat exchange module comprises a first outdoor heat exchanger and a heat recovery heat exchanger arranged in series;
the heat recovery heat exchanger is arranged in the exhaust channel, and the fourth fresh air heat exchanger is arranged in the air supply channel; and
the first compressor, the first outdoor heat exchanger, the second compressor, the second outdoor heat exchanger and the outdoor fan are arranged in the outdoor unit casing, and the first outdoor heat exchanger and the second outdoor heat exchanger are connected and arranged opposite to the outdoor fan.
